# EUROPEAN PATENT SPECIFICATION

(11) **EP 2 535 249 B1**
(45) Date of publication and mention of the grant of the patent: **26.04.2017**
(21) Application number: 10845800.1
(22) Date of filing: 18.11.2010
(51) Int. Cl.: B62K 19/38, B60T 8/34, B60T 17/02, B62J 11/00, B62K 11/00, B62L 3/00, B62L 3/02

(54) **SCOOTER-TYPE MOTORCYCLE**
ROLLERARTIGES KRAFTFAHRZEUG
VÉHICULE MOTORISÉ DU TYPE SCOOTER

(30) Priority: 09.02.2010 JP 2010026954
(43) Date of publication of application: 19.12.2012
(73) Proprietor: Suzuki Motor Corporation, Shizuoka 432-8611 (JP)
(72) Inventor: OURA, Kosei, Hamamatsu-shi Shizuoka 432-8611 (JP)
(74) Representative: Viering, Jentschura & Partner mbB Patent- und Rechtsanwälte
(86) International application number: PCT/JP2010/070584
(87) International publication number: WO 2011/099209

(56) References cited:
- JP-A- 3 016 893
- JP-A- 11 314 591
- JP-A- 2001 310 784
- JP-A- 2002 029 395
- JP-A- 2005 145 287

## Description

### TECHNICAL FIELD

The present invention relates to a scooter-type motorcycle. In particular, it relates to a scooter-type motorcycle including an antilock brake device braking wheels so that they are not locked.

### BACKGROUND ART

Conventionally, a motorcycle including an antilock brake device has been known. For example, an antilock brake device for scooter disclosed in Patent literature 1 includes a hydraulic control device that controls a hydraulic system of a front wheel-side disk brake and a hydraulic system of a rear wheel-side disk brake so that their hydraulic pressures are increased/decreased. This hydraulic control device is provided at a more front part of a vehicle body than a head pipe of a vehicle body frame to be supported by a head pipe via a bracket.

### CITATION LIST

### PATENT LITERATURE

Patent Literature 1: Japanese Patent No. 4298810
Further, JP 11 314591 A discloses a scooter-type two-wheeled motor vehicle that has a cylinder unit extending in the front back direction beneath a sitting seat and that has a hydraulic control device for controlling the hydraulic pressure of hydraulic brakes so as to prevent locking the wheel. The hydraulic control devices is disposed below the sitting seat opposite to a power transmission device.
Document JP 3-16893 A1 discloses a motor cycle
wherein a hydraulic control device is disposed beneath a sitting seat at a position which is on the opposite side of a power transmission case and is above the side of a cylinder unit.

### SUMMARY OF INVENTION

### TECHNICAL PROBLEM

However, in the motorcycle disclosed in Patent Literature 1, the hydraulic control device being a heavy object is disposed at a high position of the vehicle body, at the front part of the vehicle body apart from the gravity center of the vehicle body, which has a problem that it affects driving stability. Further, when the hydraulic control device is disposed at the more front part of the vehicle body than the head pipe, the hydraulic control device has to be disposed at a more forward part than a rotation region so as not to interfere with a front fork when the front fork supported by the head pipe rotates. Accordingly, the bracket for supporting the hydraulic control device becomes large, leading to a problem of an increase in weight and cost.

The present invention was made in consideration of the aforesaid problems and has an object to concentrate a mass to the vicinity of the gravity center of a vehicle body to improve driving stability in a scooter-type motorcycle including an antilock brake device.

### SOLUTION TO PROBLEM

A scooter-type motorcycle comprising:
a unit swing-type engine which has a cylinder unit extending in a front-rear direction under a seating seat, integrally includes a power transmission device which extends rearward from one side in a left-right direction of a crankcase to transmit a power to a rear wheel, and is supported so as to be vertically swingable relative to a vehicle body;
an air-fuel mixture supply device which is disposed on the one side in the left-right direction of the vehicle body and supplies an air-fuel mixture to the cylinder unit; and
an antilock brake device having a hydraulic control device which includes a motor(50a) and a hydraulic pump(50b) driven by the motor(50a) and controls a hydraulic pressure of a hydraulic brake to prevent the wheels from being locked,
wherein the hydraulic control device is disposed at a position that is below the seating seat, is behind a seat hinge(31) supporting a front end portion of the seating seat(14), is the other side in the left-right direction of the vehicle body, is close to and above a side of the cylinder unit, and is opposite the air-fuel mixture supply device across the cylinder unit in a plane view.
Further, the hydraulic control device is disposed at a substantially same height with that of the air-fuel mixture supply device in a side view.

There is further provided a pivot shaft which supports a pivot support part projectingly provided on the unit swing-type engine, and the hydraulic control device is disposed in front of the pivot shaft.

There is further provided a rear brake caliper whose hydraulic pressure is controlled by the hydraulic control device, and the rear brake caliper is disposed on the other side in the left-right.

### DESCRIPTION OF EMBODIMENTS

Hereinafter, a suitable embodiment of a scooter-type motorcycle including an antilock brake device according to the present invention will be described based on the drawings.

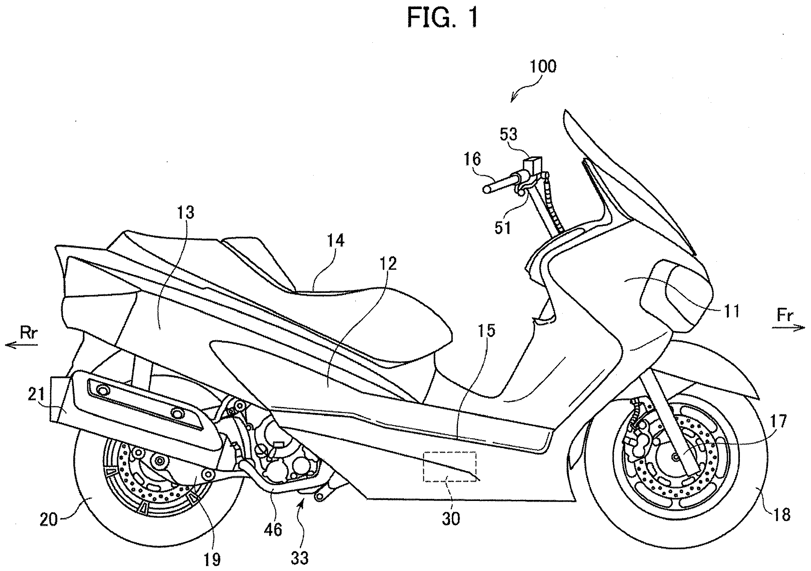

First, the whole structure of a scooter-type motorcycle 100 will be described with reference to Fig. 1. Fig. 1 is a right side view of the scooter-type motorcycle according to this embodiment. Note that in the drawings, a front direction of a vehicle body is shown by an arrow Fr, a rear direction of the vehicle body is shown by an arrow Rr, a right side of the vehicle body is shown by an arrow R, and a left side of the vehicle body is shown by an arrow L, when necessary.

In Fig. 1, the scooter-type motorcycle 100 (hereinafter referred to as the motorcycle) has a later-described plurality of body frames made of steel or an aluminum alloy material, as its skeletal structure. The body frames are covered by a plurality of cowlings such as a front leg shield 11, a center leg shield 12, and a frame cover 13, whereby its outer appearance is refined. Between the front leg shield 11 and the center leg shield 12, a floorboard 154 where legs of a passenger seated in a seating seat 14 are put is provided.

Further, in a front part of the vehicle body, a handlebar 16 for driving is disposed along a left-right direction. In a lower front of the handlebar 16, a pair of front forks 17 whose direction is changed by the steering of the handlebar 16 is provided. The pair of front forks 17 pivotally supports a front wheel 18.

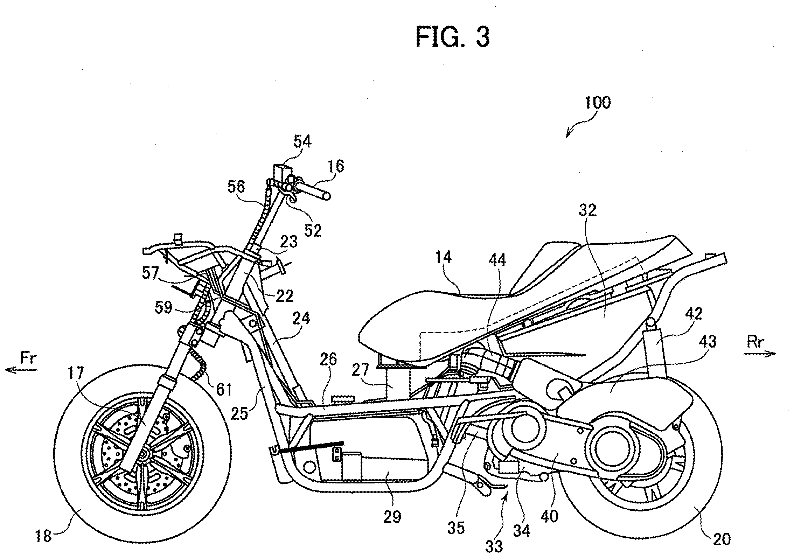

Further, in a rear part of the vehicle body, a swing arm 19 is provided so as to be vertically swingable with a unit swing-type engine 33. At a rear end of the swing arm 19 and a power transmission device 40 (see Fig. 3) of the unit swing-type engine 33, a rear wheel 20 is pivotally supported. Further, a muffler 21 is coupled to the swing arm 19.

Next, constituent members of the motorcycle 100 will be described with reference to Fig. 2, Fig. 3, and Fig. 4. Fig. 2 is a right side view of the vehicle body with the cowlings being removed. Fig. 3 is a left side view with the cowlings being removed. Fig. 4 is a plane view of the vehicle body with the cowlings being removed.

In the front part of the vehicle body of the motorcycle 100, a steering head pipe 22 is disposed between the aforesaid handlebar 16 and front forks 17. In the steering head pipe 22, a steering shaft 32 connecting the handlebar 16 and the front forks 17 is rotatably inserted.

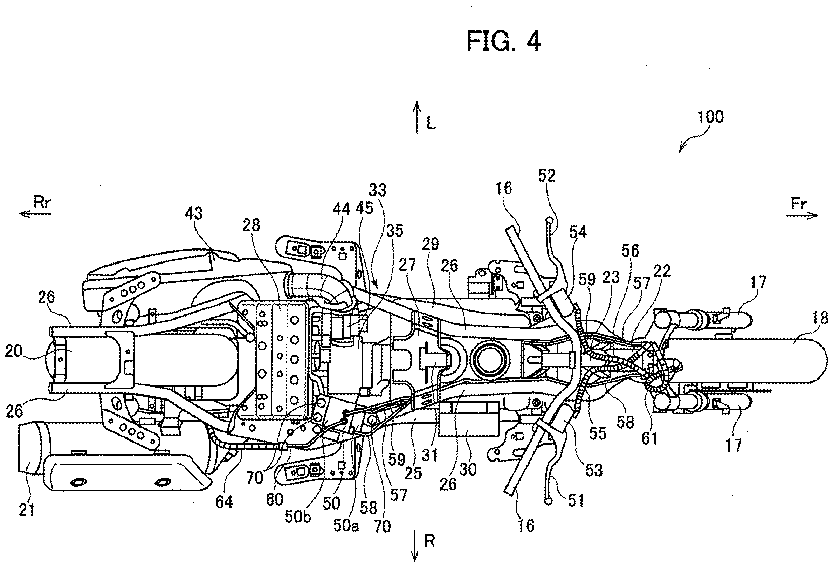

In the steering head pipe 22, an upper pipe 24 as the vehicle body frame extends from a substantially center in a rear obliquely downward direction. Further, from a lower end of the steering head pipe 22, a pair of lower pipes 25 extends substantially in parallel to the upper pipe 24 in the rear obliquely downward direction. A pair of left and right main pipes 26 branching off from the middle of each of the lower pipes 25 to extend in a substantially horizontal direction toward the rear side of the vehicle body is coupled. The main pipe 26, after extending rearward in the substantially horizontal direction, extends in a rear obliquely upward direction from a position close to the rear wheel 20 to reach a rear part of the vehicle body. Further, each of the lower pipes 25, after extending in substantially the horizontal direction from a lower side toward the rear side of the vehicle body, extends in a rear obliquely upward to be coupled to each of the main pipes 26. As shown in Fig. 4, in a plane view, the pair of main pipes 26 get apart from each other in the left-right direction as they go from the front side toward the rear side, and thereafter are curved at the rear side so as to be close to each other again. Further, the pair of main pipes 26 are coupled via a seat hinge bridge 27, a suspension bridge 28, and so on.

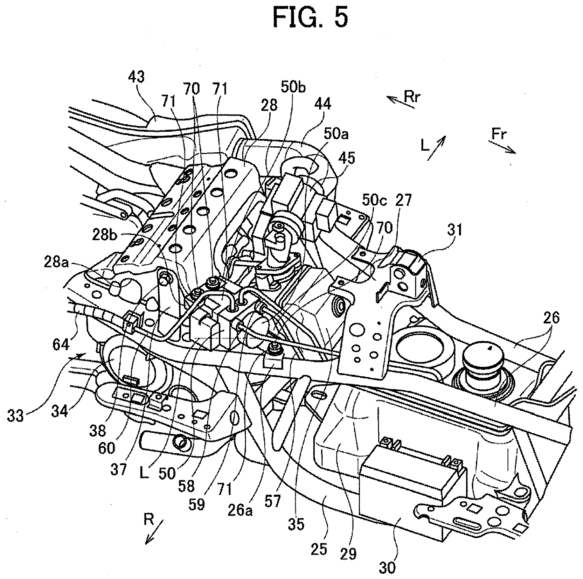

Fig. 5 is a perspective view of a center portion of the vehicle body seen from above. As shown in Fig. 5, in a space surrounded by the pair of main pipes 26 and the pair of lower pipes 25, a fuel tank 29 is disposed. A battery 30 is provided at a position that is on the right of the fuel tank 29 and is above the right lower pipe 25. As shown by the dotted line in Fig. 1, the battery 30 is located below the floorboard 15.

A seat hinge 31 is coupled to an upper surface of the seat hinge bridge 27. The seat hinge 31 is pivotally supported so as to be openable and closable with respect to a front end portion of the seating seat 14.

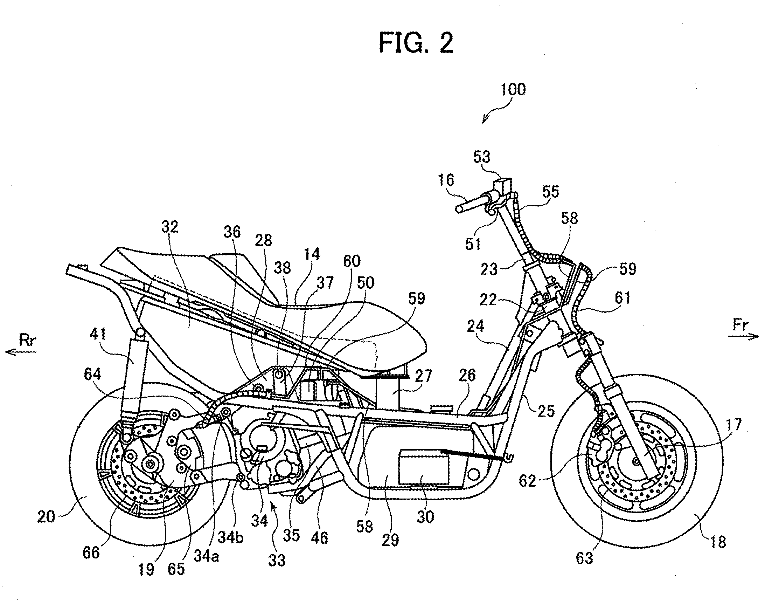

Further, as shown in Fig. 2 and Fig. 3, a luggage box 32 in which a housing space is formed is disposed under the seating seat 14. Note that in Fig. 2 and Fig. 3, part of the luggage box 32 hidden by the seating seat 14 is shown by the dotted line. The luggage box 32 has such a size from a front end portion to a rear end portion of the seating seat 14, and is covered by the seating seat 14 from above.

Under the seating seat 14, concretely, at a position that is below the luggage box 32 and at the left-right direction center of the vehicle body, the unit swing-type engine 33 is disposed. The unit swing-type engine 33 is constituted by including a crankcase 34 supporting a not-shown crankshaft, a cylinder unit 35 in which a not-shown piston slides, the power transmission device 40 (see Fig. 3), and so on. The crankcase 34 is located at a position in front of the rear wheel 20 and under the suspension bridge 28. Further, the cylinder unit 35 extends in the front-rear direction, concretely, from the crankcase 34 toward a front slightly obliquely upward direction.

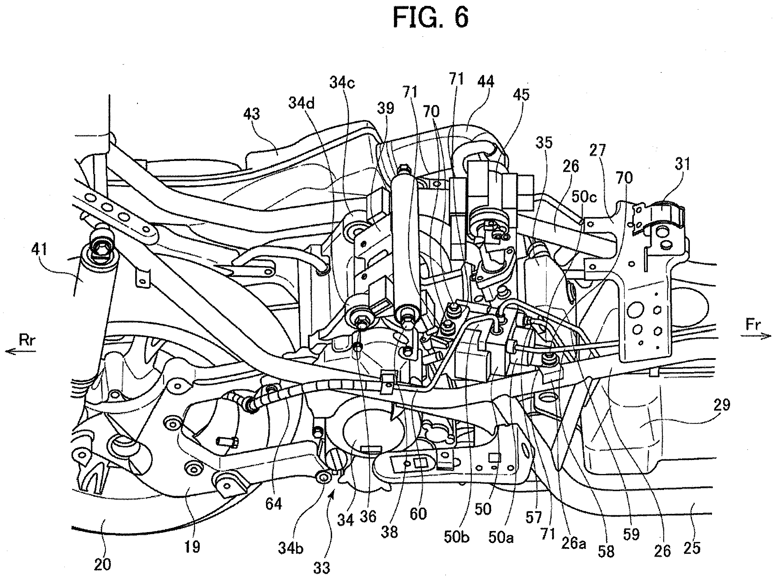

As shown in Fig. 2, the aforesaid swing arm 19 is coupled to upper and lower portions 34a, 34b which are located on a rear right side of the crankcase 34. A first shock absorber 41 is disposed between a rear end portion of the swing arm 19 and a rear portion of the right main pipe 26. Fig. 6 is a perspective view showing the vehicle center, with the aforesaid suspension bridge 28 being removed. As shown in Fig. 6, on both left and right of an upper portion of the crankcase 34, a pair of pivot support parts 34c, 34d are projectingly provided to support the first pivot shaft 36. Further, in a front obliquely upward direction of the first pivot shaft 36, a pair of pivot support brackets 37 (see Fig. 5) disposed on the left and right of the vehicle body supports a second pivot shaft 38. The first pivot shaft 36 and the second pivot shaft 38 are linked by a swing member 39. Therefore, when the swing member 39 swings in a predetermined range with respect to the center of the second pivot shaft 38, the transmission of the vibration of the unit swing-type engine 33 to the vehicle body via the vehicle frame is suppressed. Further, when the unit swing-type engine 33 swings with respect to the center of the first pivot shaft 36, the transmission of the vibration of the rear wheel 20 to the vehicle body is suppressed. Incidentally, the first pivot shaft 36 and the second pivot shaft 38 are located in the suspension bridge 28 formed in a triangular prism shape, but the first pivot shaft 36 can be seen from a right side surface shown in Fig. 2 through a hole 28a (see Fig. 5) cut in the suspension bridge 28. Further, an end portion of the second pivot shaft 38 can also be seen in the drawings shown in Fig. 2 and Fig. 5 since it is also pivotally supported by the pivot support bracket 37.

Further, on the left of the crankcase 34, the power transmission device 40 which transmits the rotation of the crankshaft to the rear wheel 20 is disposed as shown in Fig. 3. The power transmission device 40 has a long shape along the front-rear direction and disposed from the crankcase 34 to the rear wheel 20. The power transmission device 40 pivotally supports the rear wheel 20 from the left side together with the aforesaid swing arm 19 located at the right side of the vehicle body. Further, the power transmission device 40 is swingable with respect to the center of the first pivot shaft 36 as a unit with the crankcase 34 and the cylinder unit 35. Between a rear end portion of the power transmission device 40 and a rear portion of the left main pipe 26, a second shock absorber 42 is disposed.

The aforesaid first shock absorber 41 and second shock absorber 42 absorb the swinging of the rear wheel 20 and the unit swing-type engine 33 with respect to the first pivot shaft 36.

Further, as shown in Fig. 3, an air cleaner box 43 is disposed on an upper portion of the power transmission device 40. A connection tube 44 is connected to a front end portion of the air cleaner box 43. The connection tube 44 passes between the luggage box 32 and the left main pipe 26, and as shown in Fig. 5 and Fig. 6, is connected to a not-shown intake port in an upper portion of the cylinder unit 35. Between the cylinder unit 35 and the connection tube 44, an air-fuel mixture supply device 45 is disposed. A not-shown fuel injector is disposed on the air-fuel mixture supply device 45 to supply an air-fuel mixture in which a fuel is mixed to the cylinder unit 35. This air-fuel mixture supply device 45 is disposed in a left obliquely upward direction of the cylinder unit 35. The air-fuel mixture supplied to the cylinder unit 35 is burned in a not-shown combustion chamber to slide the piston and rotate the crankshaft. Further, exhaust gas generated at the time of the combustion passes through an exhaust pipe 46 shown in Fig. 2 connected to a not-shown exhaust port in a lower portion of the cylinder unit 35 to be discharged from the muffler 21.

Next, the motorcycle 100 according to this embodiment includes an antilock brake device having a hydraulic control device 50 that controls the hydraulic brakes of the front wheel 18 and the rear wheel 20 to prevent the front wheel 18 and the rear wheel 20 from being locked during the braking time. Besides the hydraulic control device 50, the antilock brake device includes an electronic control device, a master cylinder, a brake hose, a brake caliper, and so on which will be described later.

Hereinafter, the structure of the antilock brake device according to this embodiment will be described.

As shown in Fig. 2 and Fig. 4, on the right of the handlebar 16, a front brake lever 51 and a front brake master cylinder 53 are disposed. Further, as shown in Fig. 3 and Fig. 4, on the left of the handlebar 16, a rear brake lever 52 and a rear brake master cylinder 54 are disposed.

A front brake hose upper 55 is connected to the front brake master cylinder 53, and a rear brake hose upper 56 is connected to the rear brake master cylinder 54. The front brake hose upper 55 and the rear brake hose upper 56 extend down substantially along the steering shaft 23 to be connected to an entrance-side front brake pipe 57 and an entrance-side rear brake pipe 58 respectively. The entrance-side front brake pipe 57 and the entrance-side rear brake pipe 58 are each disposed substantially along the lower pipe 25 and the main pipe 26 from the steering head pipe 22 to be connected to the hydraulic control device 50 disposed on the main pipe 26 on the right of the vehicle body. As shown in Fig. 5 and Fig. 6, an exit-side front brake pipe 59 and an exit-side rear brake pipe 60 are connected to the hydraulic control device 50.

The exit-side front brake pipe 59 passes through the same route as that of the input-side front brake pipe 57 from the hydraulic control device 50 to extend up to a front portion of the steering head pipe 22 and is connected to a front brake hose lower 61. As shown in Fig. 2, the front brake hose lower 61 extends down toward the front wheel 18 along the steering head pipe 22 and is thereafter connected to a front brake caliper 62 as the hydraulic brake of the front wheel 18. The front brake caliper 62 is coupled to the right front fork 17 and it sandwiches and presses a front brake disk 63 which rotates in synchronization with the front wheel 18, from both sides, thereby braking the front wheel 18. Further, the exit-side rear brake pipe 60 extends rearward along the right main pipe 26 to be connected to the rear brake hose 64. The rear brake hose 64 extends toward the rear wheel 20 along the swing arm 19 and is thereafter connected to a rear brake caliper 65 as the hydraulic brake of the rear wheel 20. The rear caliper 65 is coupled to the swing arm 19 and it sandwiches and presses a rear brake disk 66 which rotates in synchronization with the rear wheel 20, from both sides, thereby braking the rear wheel 20.

As shown in Fig. 5 and Fig. 6, the hydraulic control device 50 includes a motor 50a and a hydraulic pump 50b which is driven by the motor 50a. The hydraulic pump 50b includes a not-shown electromagnetic valve for causing the front brake caliper 62 and the rear brake caliper 65 to increase/decrease a hydraulic pressure. Further, the hydraulic control device 50 has a not-shown built-in electronic control device. The electronic control device transmits a control signal to the hydraulic control device 50 when detecting a predetermined deceleration or more of the front wheel 18 and the rear wheel 20 via a not-shown front wheel speed sensor or a not-shown rear wheel speed sensor. According to the control signal, the hydraulic control device 50 causes the front brake caliper 62 and the rear brake caliper 65 to decrease or increase the hydraulic pressure so that the deceleration does not become equal to the predetermined deceleration or more. Note that power is supplied from the battery 30 to the hydraulic control device 50 and the electronic control device.

As described above, in the motorcycle 100, the antilock brake device is capable of braking the front wheel 18 and the rear wheel 20 so as to prevent them from being locked.

Next, since the hydraulic control device 50 is a heavy object including the motor 50a and so on, it influences drivability of the motorcycle 100 depending on a position where it is mounted. In this embodiment, the hydraulic control device 50 is disposed at such a position as to improve driving stability of the motorcycle 100. Hereinafter, the mounting of the hydraulic control device 50 will be described in detail.

First, as shown in Fig. 2, the hydraulic control device 50 is disposed under the seating seat 14, more concretely, under the luggage box 32 in a side view. Further, the hydraulic control device 50 is located at the position between the seat hinge bridge 27 and the suspension bridge 28 and in front of the first pivot shaft 36. Further, as shown in Fig. 5 and Fig. 6, the hydraulic control device 50 is located at a position close to the cylinder unit 35, more concretely, at a position in a right obliquely upward direction (side upward direction) of the cylinder unit 35. Since the hydraulic control device 50 is thus disposed near the gravity center of the vehicle body to thereby enable concentration of a mass, and driving stability of the motorcycle 100 is improved.

Further, as shown in Fig. 5, the hydraulic control device 50 is disposed on the right main pipe 26. More concretely, the hydraulic control device 50 is coupled to a mounting bracket 26a installed on the main pipe 26 and a mounting bracket 28b formed on the suspension bridge 28 via a mounting plate 50c with the use of a plurality of fixing bolts 70. By thus disposing the hydraulic control device 50 on the main pipe 26, it is possible to downsize the mounting bracket 26a, which enables a weight reduction and low-cost manufacture. Further, between the mounting plate 50c and the fixing bolts 70, elastic members 71 for vibration absorption are put. That is, the hydraulic control device 50 is floatably fastened by the elastic members 71. The elastic member 71 prevents the vibration of the motor 50a of the hydraulic control device 50 from being transmitted to the vehicle body and contrarily prevents the vibration of the vehicle body from being transmitted to the hydraulic control device 50.

Further, since the hydraulic control device 50 is disposed on the right of the vehicle body, which is opposite the power transmission device 40 disposed on the left of the vehicle body, lateral balance of the vehicle body is kept and driving stability of the motorcycle 100 is improved.

Further, as shown in fig. 5 and Fig. 6, since the hydraulic control device 50 and the air-fuel mixture supply device 45 are distributed on the left and right sides across the cylinder unit 35, a height position where the hydraulic control device 50 is disposed can be substantially the same as that of the air-fuel mixture supply device 45. That is, since the hydraulic control device 50 can be disposed lower, the gravity center of the vehicle body is lowered, which improves driving stability. Further, by disposing the hydraulic control device 50 lower, it is possible to form the inside of the luggage box 32 large and lower the height of the seating seat 14.

Further, as shown in Fig. 4, the hydraulic control device 50 is disposed in a slightly inclined posture relative to the front-rear direction of the vehicle body. More concretely, it is inclined so that a line connecting tangents of the outline of the hydraulic control device 50 (see the two-dot chain line shown in Fig. 5) becomes substantially parallel to the adjacent right main pipe 26. Therefore, the hydraulic control device 50 can be disposed so as to be biased to the right as much as possible within a range where it does not abut on the right center leg shield 12 adjacent to the main pipe 26 and the cowlings as the frame cover 13, which enables good lateral balance of the vehicle body.

Next, layout of a brake hose, a brake pipe, and so on of the antilock brake device will be described. In this embodiment, since the hydraulic control device 50 is disposed at the center in the front-rear direction of the vehicle body, it is not necessary to make the rear brake hose 64 connected to the rear brake caliper 65 and the exit-side rear brake pipe 60 extremely long, which facilitates the disposition of the pipes. Further, since the rear brake caliper 65 is at the position that is on the right in the left-right direction and on the same side as the hydraulic control device 50, it is possible to make the pipe from the hydraulic control device 50 to the rear brake caliper 65 short.

Further, since the battery 30 supplying power to the hydraulic control device 50 is also on the right in the left-right direction and on the same side as the hydraulic control device 50, a not-shown wiring cord from the battery 30 to the hydraulic control device 50 can be made short, which makes it possible to reduce the motorcycle 100 in weight and manufacture it at low cost. Further, shortening the wiring cord reduces a voltage decrease by a wiring resistance, which improves power performance.

By disposing the hydraulic control device 50 at the above-described position, it is possible to concentrate the mass to the vicinity of the gravity center of the motorcycle 100, which can improve driving stability.

In this embodiment, the case where the hydraulic control device 50 is disposed on the right of the vehicle body and the power transmission device 40 is disposed on the left of the vehicle body is described, but this is not restrictive. That is, if the hydraulic control device 50 only needs to be disposed opposite the side where the power transmission device 40 is disposed in the left-right direction of the vehicle body, the lateral balance of the vehicle body can be well kept.

Further, in this embodiment, the case where the hydraulic control device 50 is mounted with the use of the mounting bracket 26a installed on the main pipe 26 and the mounting bracket 28b formed on the suspension bridge 28, but this is not restrictive. That is, the mounting brackets may be installed on any members.

Further, in this embodiment, the case where the hydraulic control device 50 is disposed below the luggage box 32 is described, but this is not restrictive. That is, adoptable is a case where the luggage box 32 is small and the luggage box 32 is not put above the hydraulic control device 50.

### INDUSTRIAL APPLICABILITY

The present invention is usable for a scooter-type motorcycle including an antilock brake device.

## Claims

1. A scooter-type motorcycle (100) comprising:
a unit swing-type engine (33) which has a cylinder unit (35) extending in a front-rear direction under a seating seat (14), integrally includes a power transmission device (40) which extends rearward from one side in a left-right direction of a crankcase (34) to transmit a power to a rear wheel (20), and is supported so as to be vertically swingable relative to a vehicle body;
an air-fuel mixture supply device (45) which is disposed on the one side in the left-right direction of the vehicle body and supplies an air-fuel mixture to the cylinder unit (35); and
an antilock brake device having a hydraulic control device (50) which includes a motor(50a) and a hydraulic pump(50b) driven by the motor(50a) and controls a hydraulic pressure of a hydraulic brake to prevent the wheels (18, 20) from being locked,
wherein the hydraulic control device (50) is disposed at a position that is below the seating seat (14), is behind a seat hinge(31) supporting a front end portion of the seating seat(14), is the other side in the left-right direction of the vehicle body, is close to and above a side of the cylinder unit (35), and is opposite the air-fuel mixture supply device (45) across the cylinder unit in a plane view.

2. The scooter-type motorcycle (100) according to claim 1, wherein the hydraulic control device (50) is disposed at a substantially same height with that of the air-fuel mixture supply device (45) in a side view.

3. The scooter-type motorcycle (100) according to claim 1 or 2, further comprising a pivot shaft (36) which supports a pivot support part (34c, 34d) projectingly provided on the unit swing-type engine (33),
wherein the hydraulic control device (50) is disposed in front of the pivot shaft (36).

4. The scooter-type motorcycle (100) according to any one of claims 1 to 3, further comprising a rear brake caliper (65) whose hydraulic pressure is controlled by the hydraulic control device (50),
wherein the rear brake caliper (65) is disposed on the other side in the left-right direction of the vehicle body.

## Patentansprüche

1. Motorrad vom Rollertyp (100) umfassend:
eine Motoreinheit vom Schwenktyp (33), welche eine unter einem Sitz (14) sich in einer Front-Heck-Richtung erstreckende Zylindereinheit (35) aufweist, integral eine sich von einer Seite in einer Links-Rechts-Richtung des Kurbelgehäuses (34) nach hinten erstreckende Kraftübertragungsvorrichtung (40) zur Übertragung einer Leistung zu einem Hinterrad (20) aufweist, und vertikal schwenkbar relativ zu einer Karosserie abgestützt ist;
eine Luft-Kraftstoff-Gemisch-Zufuhr-Vorrichtung (45), die in der Links-Rechts-Richtung der Karosserie an der anderen Seite angeordnet ist und ein Luft-Kraftstoff-Gemisch der Zylindereinheit (35) zuführt; und
ein Antiblockierbremssystem, mit einem hydraulischen Steuerungsgerät (50), welches einen Motor (50a) und eine durch den Motor (50a) angetriebene hydraulische Pumpe (50b) aufweist und einen hydraulischen Druck von einer hydraulischen Bremse steuert, um ein Blockieren der Räder (18, 20) zu verhindern,
wobei das hydraulische Steuergerät (50) in einer Position, die unter dem Sitz (14) ist, hinter einem einen vorderen Endbereich des Sitzes abstützenden Sitzscharnier (31) ist, in der Links-Rechts-Richtung der Karosserie auf der anderen Seite ist, nah an und über einer Seite der Zylindereinheit (35) ist und in einer Draufsicht der Luft-Kraftstoff-Gemisch-Zufuhr-Vorrichtung (45) an der Zylindereinheit gegenüberliegend ist, angeordnet ist.

2. Motorrad vom Rollertyp (100) nach Anspruch 1, wobei das hydraulische Steuergerät (50) in einer Seitenansicht in einer im Wesentlichen gleichen Höhe wie die Luft-Kraftstoff-Gemisch-Zufuhr-Vorrichtung (45) angeordnet ist.

3. Motorrad vom Rollertyp (100) nach Anspruch 1 oder 2 ferner umfassend eine Schwenkachse (36), welche einen Schwenkstützteil (34c, 34d), der hervorstehend die Motoreinheit vom Schwenktyp (33) abstürzt, wobei das hydraulische Steuergerät (50) vor der Schwenkachse (36) angeordnet ist.

4. Motorrad vom Rollertyp (100) nach einem der Ansprüche 1 bis 3, ferner umfassend einen hinteren Bremssattel (65), dessen hydraulischer Druck durch ein hydraulisches Steuergerät (50) gesteuert wird,
wobei der hintere Bremssattel (65) in der Links-Rechts-Richtung der Karosserie auf der anderen Seite angeordnet ist.

## Revendications

1. Motocyclette de type scooter (100) comprenant :
une unité de moteur de type oscillant (33) qui a une unité de cylindre (35) s'étendant dans une direction avant-arrière sous une selle (14), comprend de manière solidaire un dispositif de transmission de puissance (40) qui s'étend vers l'arrière à partir d'un côté dans une direction gauche-droite d'un carter de moteur (34) pour transmettre une puissance à une roue arrière (20), et est supportée afin de pouvoir osciller verticalement par rapport à un corps de véhicule ;
un dispositif d'alimentation en mélange air-carburant (45) qui est disposé sur le un côté dans la direction gauche-droite du corps de véhicule et fournit un mélange air-carburant à l'unité de cylindre (35) ; et
un dispositif d'antiblocage de frein ayant un dispositif de régulation hydraulique (50) qui comprend un moteur (50a) et une pompe hydraulique (50b) entraînée par le moteur (50a) et régule une pression hydraulique d'un frein hydraulique pour empêcher les roues (18, 20) de se bloquer,
dans laquelle le dispositif de régulation hydraulique (50) est disposé dans une position qui est au-dessous de la selle (14), est derrière une charnière de selle (31) supportant une partie d'extrémité avant de la selle (14), est l'autre côté dans la direction gauche-droite du corps du véhicule, est à proximité et au-dessus d'un côté de l'unité de cylindre (35), et est opposé au dispositif d'alimentation en mélange air-carburant (45) sur l'unité de cylindre sur une vue en plan.

2. Motocyclette de type de scooter (100) selon la revendication 1, dans laquelle le dispositif de régulation hydraulique (50) est disposé sensiblement à la même hauteur que celle du dispositif d'alimentation en mélange air-carburant (45) sur une vue latérale.

3. Motocyclette de type de scooter (100) selon la revendication 1 ou 2, comprenant en outre un arbre de pivot (36) qui supporte une partie de support de pivot (34c, 34d) prévue en saillie sur l'unité de moteur de type oscillant (33), dans laquelle le dispositif de régulation hydraulique (50) est disposé en face de l'arbre de pivot (36).

4. Motocyclette de type de scooter (100) selon l'une quelconque des revendications 1 à 3, comprenant en outre un étrier de frein arrière (65) dont la pression hydraulique est régulée par le dispositif de régulation hydraulique (50),
dans laquelle l'étrier de frein arrière (65) est disposé de l'autre côté dans la direction gauche-droite du corps de véhicule.
